# EUROPEAN PATENT APPLICATION

(11) **EP 3 904 942 A1**
(43) Date of publication of application: **03.11.2021**
(21) Application number: 20172455.6
(22) Date of filing: 30.04.2020
(51) Int. Cl.: G02B 26/08, G01N 9/24

(54) **LASER MODULE FOR FLOW CYTOMETRY**

(71) Applicant: Cobolt AB, 171 54 Solna (SE)
(72) Inventor: RÅDMARK, Magnus, 171 54 SOLNA (SE); ELGCRONA, Gunnar, 171 54 SOLNA (SE); KARLSSON, Håkan, 171 54 Solna (SE)
(74) Representative: AWA Sweden AB

(57) **Abstract**

A method of controlling a position at which a laser beam used in flow cytometry impinges on a flow cell is provided. The method comprises directing the laser beam through a first and a second prism. The method further comprises controlling a temperature of at least one of said first and second prisms, thereby controlling the position at which said laser beam impinges on the flow cell. Further, a module and an arrangement for use in flow cytometry is provided.

## Description

### Technical field

The present invention relates to optical systems used in flow cytometry. More specifically, the present invention relates to a laser module for delivering excitation light to a flow cell in a flow cytometry system, and an arrangement of such laser modules, and a corresponding method.

### Background

The use of prisms in optical systems delivering excitation light to flow cells in flow cytometry setups is known in the art. Some prior art flow cytometry systems use mirrors for directing laser beams, and other systems use prisms.

For example, US 2004/0061853 discloses a flow cytometry system using prisms and describes the advantages over mirror-based systems. It is noted that if a mirror is misplaced an angle Δθ the error in direction multiples by a factor of two. Often in flow cytometry systems many mirrors are used in series, and this effect may cause a large error. By using prisms, one may avoid such an error since the error in angle Δθ of a prism changes the output beam angle by less than Δθ, and thus the overall error will be smaller.

### Summary

In flow cytometry, excitation light is directed towards one or more points in a flow cell where fluorescence is induced, and one or more detectors are focused at the one or more points in the flow cell to detect the fluorescence. Existing flow cytometry setups either have movable optical elements for aligning the detectors to the points in the flow cell, and/or movable optical elements for aligning the excitation light to the points in the flow cell. It would have a detrimental impact on the performance of the flow cytometry system if the excitation light and the detector system were not aligned. If the detectors are static or unmovable, positions at which the excitation light impinges on the flow cell would typically need to be adjustable. However, the use of movable optical components may be troublesome and may cause calibration and stability issues.

There is thus a need for more stable laser modules for use in flow cytometry system with fixed or unmovable detectors.

The present invention is based on the insight that having movable optics might not be necessary even if the cytometry setup uses static (i.e. fixed) detectors and detector optics. The present invention was devised with an aim to be able to move sheets of laser beams (i.e. elliptical laser beams) impinging upon a flow cell in a flow cytometry system without relying on any mechanical movement of optical components. To this end, embodiments of the present invention comprise pairs of prisms, wherein the position of a laser beam at the point of impingement upon the flow cell is controlled by way of controlling a temperature of at least one of the prisms. In some embodiments, it is even conceivable to use a single prism for each laser beam, although less parameters for beam control may then be available.

Flow cytometry is a technique that may be used to measure and detect physical as well as chemical characteristics of a population of cells or particles. In flow cytometry lasers may be used to excite fluorophores in a sample, and when the fluorophores de-excite the light emitted is measured and characteristics of the sample may be calculated. Typically, laser beams with an elliptical cross-section are used where the major transverse axis of the elliptical laser beams are across a flow cell (i.e. transverse to the sample movement direction in the flow cell). In the flow cell, samples such as cells are passed through in single file usually in a medium known as sheath fluid. The elliptical laser beams covering a cross-section of the flow cell can be referred to as light sheets. By using light sheets in flow cytometry, the sideways alignment (i.e. transverse to the sample movement direction) is typically not critical since the light sheets may conveniently cover the whole cross section of the flow cell with a sufficiently uniform intensity. Instead, the alignment of the light sheets in a direction parallel to the flow cell, along the sample movement direction in flow cell, is more critical.

Generally, in flow cytometry it is desirable that the light sheets exciting particles/fluorophores in a flow cell are directed at particular points where detectors are monitoring the flow cell to detect fluorescence. As mentioned above, the prior art has relied either on movable detectors or movable optics to be able to align the light sheets and detectors to achieve good measurements.

In a flow cytometry setup using stationary detectors focused on certain points of the flow cells, the light sheets then need to be adjustable at least in a direction along the flow cell. As mentioned above, one prior art approach has been to realign optical components inside the laser modules to change the position of the light sheets in the flow cell. The inventors have realized, however, that the lack of robustness in a system with movable optics causes issues. Every time the optical components of the system are realigned possible errors may occur, and different measurement results for each realignment might be obtained. The mechanical stability may also be unsatisfactory in a system with movable parts.

It is an object of the present invention to mitigate, alleviate or eliminate one or more of the above identified deficiencies in the prior art.

According to a first aspect of the invention there is provided a method of controlling a position at which a laser beam used in flow cytometry impinges on a flow cell. The method comprises directing said laser beam through a first and a second prism. The method further comprises controlling a temperature of at least one of said first and second prisms, thereby controlling the position at which said laser beam impinges on said flow cell.

According to a second aspect of the invention there is provided a laser module comprising a laser source. The laser module further comprises a first prism arranged in a radiation beam path of said laser source, configured to transmit a laser beam of said laser source. The laser module further comprises a second prism arranged in said radiation beam path of said laser source, configured to transmit said laser beam transmitted through said first prism. The laser module further comprises a first temperature controller for controlling a first temperature of at least one of said first prism and said second prism.

According to a third aspect of the invention there is provided an arrangement for providing excitation light to a flow cell in a cytometry system, comprising a plurality of laser modules according to the second aspect of the invention.

Thus, the present invention is based on the common concept or idea of providing a temperature controllable prism(s) in order to controllably alter the refractive index of the prism(s). A change in refractive index will cause light, such as a laser beam, passing the prism to exit at a different angle, and the position of the laser beam at the point of impingement upon the flow cell can thus be controlled by controlling the temperature of the prism. The prisms can have a thermal mass sufficiently small so that a pointing direction of the laser beam passing through the prisms is stable within about 10 seconds after a temperature change, which is well within practical limits. It may be sufficient to change the pointing direction of the laser beams (light sheets) and thus the temperature of the prism(s) during alignment or calibration steps. But, it can of course be done on demand, for example before every new measurement or when need arises. It will be understood that alignment of the light sheets in embodiments of the present invention is very convenient and only the point of impact upon the flow cell needs to be observed during alignment. The calibration and alignment can thus easily be automated, for example by a suitable software.

According to an embodiment of the present invention, said laser beam is elliptical and said first and second prisms are oriented such that controlling the temperature of at least one of said prisms results in a displacement of said laser beam along a minor transversal axis of said beam. This embodiment is advantageous in that the elliptical laser beam may cover substantially the whole area of a cross section of the flow cell which it impinges. This is advantageous in that adjustment of the laser beam may only be necessary along the minor transversal axis of the laser beam, while adjustment of the position of the elliptical laser beam along the major transversal axis thereof (i.e. transverse to the flow cell) may not be necessary.

According to another embodiment of the first aspect of the present invention, a plurality of laser beams is directed through a respective pair of first and second prisms, and a position at which each of the plurality of laser beams impinges on the flow cell is controlled by controlling a temperature of at least one of said first and second prisms of each corresponding pair. This embodiment is advantageous in that laser beams with different wavelengths may be used and their position adjusted individually. Different wavelengths excite different fluorophores and it is therefore advantageous to be able to have a plurality of laser sources. An advantage of having the laser beams pass through a respective pair of first and second prisms is that they are individually adjustable such that a separation between the individual beams can be controlled.

According to another embodiment of the first aspect of the present invention, controlling a temperature of at least one of said first and second prism includes controlling the temperature of both said first and second prism. The present embodiment is advantageous in that controlling the temperature of both prisms may give a larger adjustment range.

According to another embodiment of the first aspect of the present invention, said first prism and said second prism have a respective refractive index temperature dependency (dn/dT) of the same sign, and controlling the temperature of both the first and second prism includes controlling them in opposite temperature directions. The present embodiment is advantageous in that a larger adjustment can be made to the position of the laser beam. Also, by adjusting the temperature of the prisms in opposite directions the temperature adjustment made to each prism may be smaller, i.e. of lower magnitude, and thus the adjustment will be quicker and the change of temperature for one specific prism will be lower while still achieving a large span of positions.

According to another embodiment of the first aspect of the present invention, said first prism and said second prism have a respective refractive index temperature dependency (dn/dT) of opposite sign, and controlling the temperature of both the first and second prism includes controlling them in the same direction. The present embodiment is advantageous in that the system may be more easily constructed using one way to control the temperature of both prisms but still achieve a large span of adjustable positions. Also, a lower temperature adjustment is needed to the individual prism which makes adjusting quicker. It is further advantageous in that the prisms can be placed closer together giving the invention a smaller footprint.

According to an embodiment of the second aspect of the present invention, said laser beam is elliptical and said first prism and said second prism are oriented such that controlling the temperature of at least one of said prisms results in a displacement of said laser beam along a minor transversal axis of said laser beam. The present embodiment is advantageous in that the elliptical laser beam may cover sufficiently the whole area of a cross section of the flow cell which it impinges. This is advantageous in that adjustment of the laser beam may only be necessary along the minor transversal axis of the laser beam, while adjustment of the position of the elliptical laser beam along the major transversal axis thereof (i.e. transverse to the flow cell) may not be necessary.

According to another embodiment of the second aspect of the present invention, the laser module further comprises a second temperature controller for controlling a second temperature of at least one of said first prism and said second prism, wherein the first temperature controller and the second temperature controller correspond to different prisms. The present embodiment is advantageous in that the temperatures of the prisms are independently controllable. This is advantageous in that controlling the temperature of both prisms may give a larger adjustment range.

According to another embodiment of the second aspect of the present invention, said first prism and said second prism have a respective refractive index temperature dependency (dn/dT) of the same sign, and the first and second temperature controllers are configured to control the temperature of the respective prisms in opposite directions. The present embodiment is advantageous in that a larger adjustment can be made to the position of the laser beam. Also, by adjusting the temperature of the prisms in opposite directions the temperature adjustment made to each prism may be smaller, i.e. of lower magnitude, and thus the adjustment will be quicker and the change of temperature for one specific prism will be lower while still achieving a large span of positions.

According to another embodiment of the second aspect of the present invention, said first prism and said second prism are made from the same material. The present embodiment is advantageous in that the laser module is easier constructed using fewer different parts.

According to another embodiment of the second aspect of the present invention, said first prism and said second prism have a respective refractive index temperature dependency (dn/dT) of opposite sign, and the first and second temperature controllers are configured to control the temperature of the respective prisms in the same direction. The present embodiment is advantageous in that the system may be more easily constructed using one way to control the temperature of both prisms but still achieve a large span of adjustable positions. Also, a lower temperature adjustment is needed to the individual prism which makes adjusting quicker. It is further advantageous in that the prisms can be placed closer together giving the invention a smaller footprint.

According to an embodiment of the third aspect of the present invention, said plurality of laser modules is configured to provide elliptical laser beams to the flow cell, said elliptical laser beams being separated, at a point of impingement upon said flow cell, along a minor transversal axis of the laser beams. The present embodiment is advantageous in that multiple frequencies may be used to excite different fluorophores of a sample in the flow cell.

According to another embodiment of the third aspect of the present invention, the prisms and the or each temperature controller are configured such that the separation between two adjacent laser beams at the point of impingement upon said flow cell can be adjusted by means of the or each temperature controller. The present embodiment is advantageous in that each light sheet can be adjusted independently of the others. This makes the arrangement useable for multiple possible detector setups using static detectors with different inherent spacing.

### Brief description of the drawings

The above object, as well as additional object, features and advantages of the present invention, will be more fully appreciated by reference to the following illustrative and non-limiting detailed description of preferred embodiments of the present invention, when taken in conjunction with the accompanying drawings, wherein:
Fig. 1 is a block diagram of an exemplary method according to the invention.
Fig. 2 is a block diagram of an exemplary method according to the invention.
Fig. 3 shows a schematic view of an exemplary laser module according to the invention.
Fig. 4 shows a schematic view of an exemplary laser module according to the invention.
Fig. 5 shows a schematic view of an exemplary laser module according to the invention.
Fig. 6 shows a schematic view of an arrangement including a plurality of laser modules according to the invention.
Fig. 7 shows a schematic drawing of light sheet separation in accordance with the invention.
Fig. 8 shows graphs of test results from an embodiment of the invention.
Fig. 9 shows graphs of test results from an embodiment of the invention.

### Detailed description

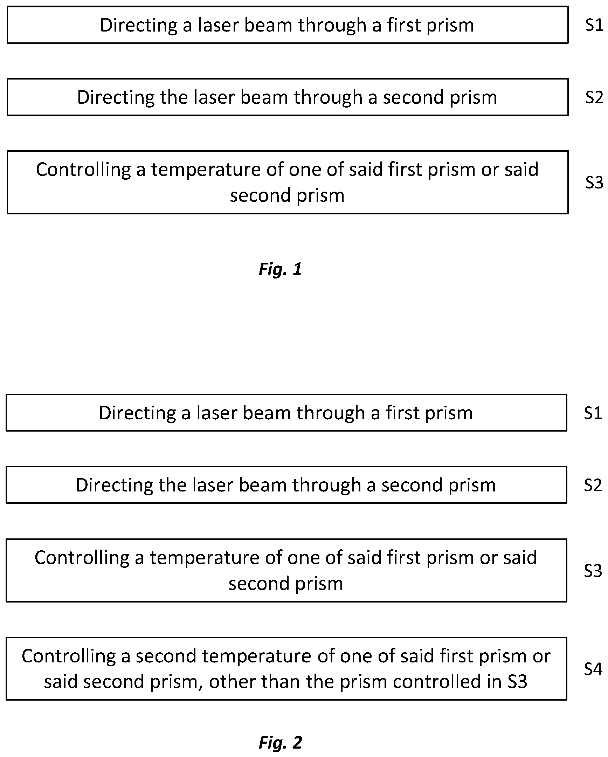

With reference to Fig. 1, an exemplary method of controlling a position at which a laser beam used in flow cytometry impinges on a flow cell will be explained. In step S1, a laser beam is directed through a first prism. The laser beam may have been transmitted from a laser source of any type, for example selected from the group: diode laser sources, diode-pumped solid state laser sources, and solid state laser sources. In step S2, the laser beam is directed through a second prism. The first and the second prism may be of the same material and have the same properties. The first and the second prism may also not be of the same material, for example one of the first and the second prism may have a refractive index that increases with temperature while the other has a refractive index that decreases with temperature.

In step S3, a temperature of one of said first prism or said second prism is controlled. A change in temperature leads to a change in refractive index of the prism for which the temperature is controlled. The first and second prisms are oriented such that controlling the temperature of at least one of said prisms results in a displacement of said laser beam along a minor transversal axis of the laser beam.

Fig. 2 shows an exemplary method of controlling a position at which a laser beam used in flow cytometry impinges on a flow cell. Steps S1, S2 and S3 are the same as those illustrated in Fig. 1. In step S4 a temperature of the other one of said first prism and said second prism is controlled. So, for example, if the temperature of the first prism is controlled in step S3, then the temperature of the second prism is controlled in step S4, and vice versa. Controlling the temperatures may be done in the same temperature direction, meaning for example raising the temperature of both the prisms. Or it may be done in opposite directions, thus lowering the temperature of one prism and raising the temperature of the other prism. Depending on the materials from which the prisms are made, the skilled person will be able to select a suitable control scheme. Controlling the temperature of both prisms may have multiple advantages. A first advantage is that a smaller temperature change may be needed to each respective prism if a smaller adjustment to the position is wanted. This will make the adjustment process quicker and the thermal lag will be smaller, meaning that the system will stabilize within a shorter time. Further, if a maximum temperature adjustment to both prisms is made, a larger span of adjustment positions is available compared to only adjusting a temperature of one prism with a maximum temperature adjustment.

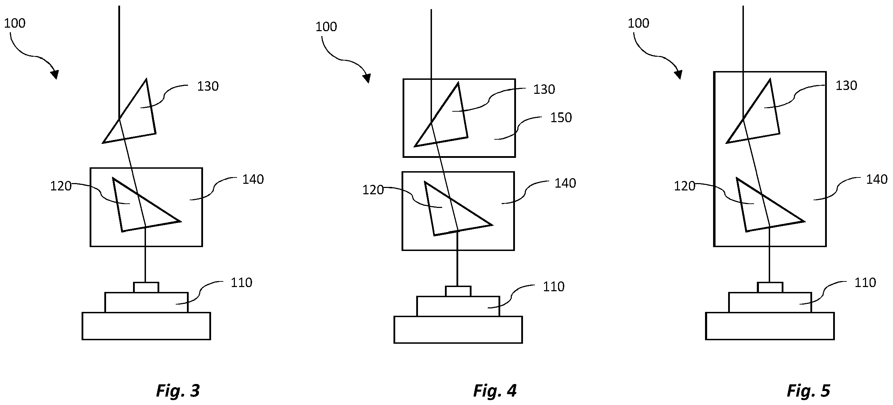

Fig. 3 shows a laser module 100 comprising a laser source 110, a first prism 120 and a second prism 130. The laser module 100 further comprises a first temperature controller 140. The first prism 120 and the second prism 130 are arranged in a radiation beam path of the laser source 110 and configured to transmit a laser beam of the laser source 110. The first temperature controller 140 is in the exemplary embodiment configured to control the temperature of the first prism 120. When the temperature of the first prism 120 is adjusted, the refractive index of the prism is changed. This effect causes the laser beam to refract at a larger, or smaller, angle depending on the properties of the prism and the change in temperature. The first prism 120 and the second prism 130 are oriented such that controlling the temperature of at least one of said prisms results in an angular displacement of said laser beam. For an elliptical laser beam (i.e. a light sheet), the displacement will typically be along a minor transversal axis of said beam. Such angular displacement upstream from the final focusing lens results in a displacement of the beam position at the focus (where the flow cell is located).

The laser source 110 may for example be selected from the group: diode laser sources, diode-pumped solid state laser sources, and solid state laser sources. For practical reasons, it may be preferred in embodiments to let the first prism 120 and the second prism 130 may be similar in terms of size and material. The prisms 120, 130 may be for example made of plastic, glass or other transparent materials. The prisms 120, 130 may be cut at a 45-degree angle, but they may also be cut at a different angle. It should be understood, however, that the prisms may very well be different in both size and material in embodiments of the invention.

The first temperature controller 140 may for example be a thermoelectric controller (TEC). The prism can be mounted directly on the surface of the TEC, or on a thermally conductive mount which in turn is mounted on the TEC. When a voltage is applied over the TEC, heat is transferred from one side to the other, and the component (prism) mounted on the TEC will be heated or cooled depending on the polarity of the voltage.

Fig. 4 shows an exemplary laser module 100 similar to that of Fig. 3. The laser module 100 comprises a laser source 110, a first prism 120 and a second prism 130. The laser module 100 further comprises a first temperature controller 140, and a second temperature controller 150. The first and the second temperature controllers 140, 150 are configured to adjust the temperature of the prisms 120, 130 respectively. In this exemplary embodiment the temperature controllers 140, 150 may adjust the temperature of the prisms 120, 130 in the same direction, for example raising the temperature of the prisms 120, 130, or in different directions, i.e. raising the temperature of for example the first prism 120 and lowering the temperature of the second prism 130. Depending on the material of the prisms 120, 130 one of these examples may be more beneficial. If the prisms 120, 130 are made of materials that have a respective refractive index temperature dependency (dn/dT) of opposite sign, the first and second temperature controllers may be configured to control the temperature of the respective prisms in the same direction. This could lead to a larger angular displacement of the laser beam emitted from the laser source compared to embodiments in which only one of the prisms is temperature controlled. For the same reason, if the prisms 120, 130 are made of materials having a respective refractive index temperature dependency (dn/dT) of the same sign, the first and second temperature controllers may be configured to control the temperature of the respective prisms in opposite directions.

Although it is preferred to use a pair of prisms for each laser beam, it is also conceivable to have a single prism for each beam. The beam control may then not be as versatile, but may in some applications still be sufficient. When a single prism is used, there will also be some change of the beam ellipticity. For example, with a right angled glass prism having a dn/dT around 9×10⁻⁶ K1 a temperature change of about 30 °C may give a change in propagation angle for the laser beam of about 500 µrad, while the transversal cross section will change by a factor of about 1.00015. Such small change in the transversal cross section of the beam is, however, entirely negligible in the context. When a single prism is used for changing the propagation direction of the laser beam, it is preferred to also have one or more mirrors downstream from the prism to correct for the change in direction. Alternatively, the optical set-up can be adapted to the expected change in direction.

Fig. 5 shows an exemplary embodiment of a laser module 100 similar to those disclosed in Fig. 3 and Fig. 4. The laser module 100 comprises a laser source 110, a first prism 120, a second prism 130 and a first temperature controller 140. The first temperature controller 140 is in this exemplary embodiment configured to control the temperature of both the first prism 120 and the second prism 130. In this embodiment where both the first prism 120 and the second prism 130 are mounted on the same temperature controller, the prisms will have the same temperature and should thus be made of materials having a respective refractive index temperature dependency (dn/dT) of opposite sign.

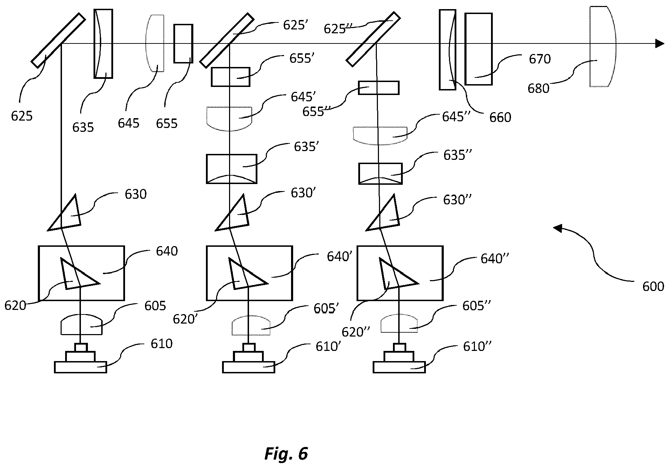

Fig. 6 shows an exemplary arrangement 600 for providing excitation light to a flow cell in a cytometry system. The arrangement 600 comprises laser sources 610, 610', 610" emitting one laser beam each. The laser sources 610, 610', 610" may all emit beams of different frequencies. The arrangement further comprises a first prism 620, 620', 620" and a second prism 630, 630', 630" for each respective laser source 610, 610', 610". A first temperature controller 640, 640', 640" is coupled to each respective first prism 620, 620', 620". The first temperature controllers 640, 640', 640" are configured to individually control the temperature of each respective first prism 620, 620', 620". Each laser source 610, 610', 610" is further associated with respective beam shaping optics 605, 605', 605". Further associated with each laser source 610, 610', 610" are lenses 635, 645, 660, 670 to shape and direct each laser beam. The last two lenses 660, 670 are shared for all laser sources 610, 610', 610" and provide for the final shape and direction of the composite output beam. To direct the laser beams, a folding mirror 625 and beam splitters 625', 625" are used as shown in the figure. There may also be provided an optical filter 655, 655', 655", such as a band pass filter, in the path of one or more of the laser beams. A final focusing lens 680 is also provided for focusing the laser beams onto the cytometry flow cell. Lens 680 may preferably be an achromatic lens having a focal length of about 10-150 mm, such as 60-100 mm.

It is to be understood that an arrangement according to Fig. 6 could also include other optical components and lenses, or include less components that disclosed in the figure. Other embodiments could also include a number of second temperature controllers for each second prism 630, 630', 630" in accordance with the laser module disclosed in Fig. 4. It is also understood that the first temperature controllers 640, 640', 640" could be configured to control the temperature of both the first prisms 620, 620', 620" and the second prisms 630, 630', 630" in other embodiments. The optical components may be similar for each laser source 610, 610', 610" but they may also include different characteristics such as focal lengths or lenses of different materials. Depending on the type of laser source 610, 610', 610" used or the wavelength, different optical components might be beneficial to the use with the individual laser source 610, 610', 610". For example, the optical components are typically provided with surface coatings designed for a particular wavelength or wavelength range. A person skilled in the art will understand that there are many different possible ways to construct an arrangement according to the invention.

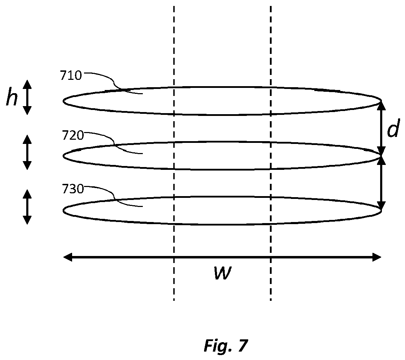

Fig. 7 shows an exemplary output from the arrangement disclosed in Fig. 6. Fig. 7 shows a cross section of three light sheets 710, 720, 730 that may be directed to impinge on a flow cell in flow cytometry to excite fluorophores. The light sheets 710, 720, 730 are individually adjustable along a minor transversal axis (i.e. up/down in the drawing) of the respective beam by means of a respective prism pair in accordance with the present invention. Using light sheets, i.e. laser beams of elliptical cross section as shown in the figure, a width of a flow cell transverse to the sample movement direction may be fully illuminated at an almost uniform intensity, and therefore alignment of each light sheet may be required only along the minor transversal axis of a beam, i.e. along the flow cell. In Fig. 7, a flow cell is schematically indicated by a pair of dashed lines. The wavelengths of the light sheets are typically different in order to excite different fluorophores in the samples. In an exemplary embodiment, the minor transversal axis of each light sheet (the "height"), indicated by *h* in Fig. 7, can be about 10 µm and the major transversal axis (the "width"), indicated by *w* in Fig. 7, can be about 50-150 µm. The separation *d* between the light sheets (laser beams) in the flow direction of the flow cell depends on the implementation, and can be several hundreds of micrometers or less than a few tens of micrometers. In fact, the separation *d* may be similar to the minor transversal axis of the light sheets, such that there is no gap between the light sheets (i.e. that the light sheets are just "touching"). It is preferred, however, that any overlap between neighboring light sheets does not exceed 5% in terms of beam power. In some implementations, however, it is even conceivable that the separation *d* is zero (i.e. some or all light sheets overlap), which may be preferred, for example, if the laser beams can be modulated such that only one laser beam at the time illuminates the flow cell.

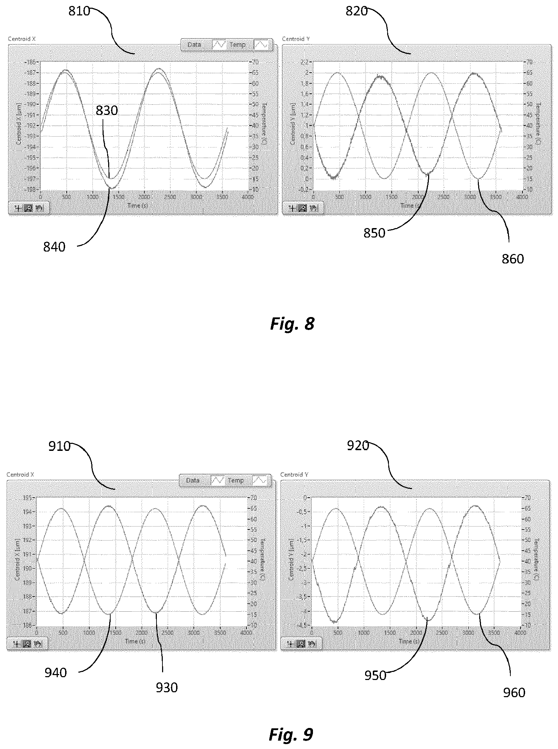

Fig. 8 shows results from a test performed for an embodiment of the invention. The test setup was a laser module according to an embodiment of the invention as described in relation Fig. 3, i.e. only the temperature of one prism of each pair was controlled. The prisms used in these tests were made from glass having an absolute refractive index temperature dependence (dn/dT) around 9×10⁻⁶ K1. The test setup further comprised a focusing lens, focusing the output laser beam from the laser module onto a focus point. Further, a camera/detector consisting of an imaging lens and a camera was focused on the same focus point. In the focus point, a light sheet similar to one of those shown in relation to Fig. 7 was detected by the detector. If a similar setup would be used in flow cytometry, the focus point would correspond to the position of the flow cell. The position along a minor and a major axis of the light sheet was then measured when a temperature of one prism in the laser module was adjusted. In this particular test illustrated in Fig. 8, a laser with a wavelength of 405 nm was used. The results can be seen in the graphs 810 and 820 and will now be explained.

Graph 810 shows the change in position of a center point of a light sheet along a minor axis of the laser beam in relation to temperature. The temperature is varied along a first curve 830 (right axis) and the data points measured are plotted in a second curve 840 (left axis). As can be seen, when varying the temperature according to a sinusoidal pattern, the position of the center point of the light sheet also changes according to a sinusoidal pattern. As seen from graph 810, a change in temperature between approximately 15 and 65 degrees Celsius resulted in an adjustment range of around 11 µm for the position of the center point of the light sheet along the minor axis of the laser beam. This result shows that the invention as disclosed in the present application achieves the goal of adjusting a light sheet in a flow cell by varying a temperature of a prism. The result of 11 µm is considered a fair result that is sufficient for most flow cytometry systems, and it is plausible for the adjustment range to double if the temperature of both prisms were to be controlled.

Graph 820 shows the varying in position of the center point of the light sheet along a major axis of the laser beam in relation to temperature. A third curve 850 represent the data points measured and a fourth curve 860 represents the temperature. The temperature is varied along the fourth curve 860 approximately between 15 and 65 degrees Celsius, and as can be seen by the third curve 850 the position of the center point of the light sheet along a major axis of the light sheet varies around 2 µm from peak to peak. In these tests, the prisms were not intentionally oriented in order to introduce any adjustment along this direction, and it is thus positive that the shift along this direction is small. The shift of 2 µm is expected to be entirely negligible in view of the large extension of the light sheet in this direction. The change in position for the center point along the major axis of the light sheet is mentioned here as an observation, and to illustrate that it is sufficiently small to be negligible. The underlying reasons for the adjustment of the light sheet in this direction was not investigated, but it may be due to some thermal effect, or due to non-parallel surfaces or slight misalignment within the test setup.

Fig. 9 shows similar graphs 910, 920 to those disclosed in Fig. 8. The test setup used is the same as for Fig. 8 except the laser source used has a wavelength of 638 nm. Graph 910 shows the relation between the position along a minor axis of a laser sheet of the center point of the laser sheet and temperature. The first curve 930 shows the data points and the second curve 940 the temperature. When varying the temperature between approximately 15 and 65 degrees Celsius, an adjustment range of 7.5 µm was observed. Graph 920 shows the relation between the position along a major axis of a laser sheet of the center point of the laser sheet and temperature. The third curve 950 shows the data points and the fourth curve 960 shows the temperature. Here a peak to peak distance of 4 µm was observed.

### Conclusion

A method of controlling a position at which a laser beam used in flow cytometry impinges on a flow cell has been disclosed. The method comprises directing the laser beam through a first and a second prism. The method further comprises controlling a temperature of at least one of said first and second prisms, thereby controlling the position at which said laser beam impinges on said flow cell. Further, a corresponding module and an arrangement for use in flow cytometry is provided.

## Claims

1. A method of controlling a position at which a laser beam used in flow cytometry impinges on a flow cell, comprising
directing said laser beam through a first and a second prism, and
controlling a temperature of at least one of said first and second prisms, thereby controlling the position at which said laser beam impinges on said flow cell.

2. The method of claim 1, wherein said laser beam is elliptical and wherein said first and second prisms are oriented such that controlling the temperature of at least one of said prisms results in a displacement of said laser beam along a minor transversal axis of said beam.

3. The method of claim 1 or 2, wherein a plurality of laser beams is directed through a respective pair of first and second prisms, and wherein a position at which each of the plurality of laser beams impinges on the flow cell is controlled by controlling a temperature of at least one of said first and second prisms of each corresponding pair.

4. The method according to any one of claims 1-3, wherein controlling a temperature of at least one of said first and second prism includes controlling the temperature of both said first and second prism.

5. The method according to claim 4, wherein said first prism and said second prism have a respective refractive index temperature dependency (dn/dT) of the same sign, and wherein controlling the temperature of both said first and second prism includes controlling them in opposite directions.

6. The method according to claim 4, wherein said first prism and said second prism have a respective refractive index temperature dependency (dn/dT) of opposite sign, and wherein controlling the temperature of both the first and second prism includes controlling them in the same direction.

7. A laser module (100) comprising
a laser source (110),
a first prism (120) arranged in a radiation beam path of said laser source, configured to transmit a laser beam of said laser source,
a second prism (130) arranged in said radiation beam path of said laser source, configured to transmit said laser beam transmitted through said first prism,
a first temperature controller (140) for controlling a first temperature of at least one of said first prism and said second prism.

8. The laser module of claim 6, wherein said laser beam is elliptical and wherein said first prism and said second prism are oriented such that controlling the temperature of at least one of said prisms result in a displacement of said laser beam along a minor transversal axis of said laser beam.

9. The laser module according to any one of claims 4-8 further comprising
a second temperature controller for controlling a second temperature of at least one of said first prism and said second prism, wherein the first temperature controller and the second temperature controller correspond to different prisms.

10. The laser module according to claim 9, wherein said first prism and said second prism have a respective refractive index temperature dependency (dn/dT) of the same sign, and wherein the first and second temperature controllers are configured to control the temperature of the respective prisms in opposite directions.

11. The laser module according to claim 10, wherein said first prism and said second prism are made from the same material.

12. The laser module according to claim 9, wherein said first prism and said second prism have a respective refractive index temperature dependency (dn/dT) of opposite sign, and wherein the first and second temperature controllers are configured to control the temperature of the respective prisms in the same direction.

13. An arrangement for providing excitation light to a flow cell in a cytometry system, comprising
a plurality of laser modules according to any of one of the claims 6-12.

14. The arrangement according to claim 13, wherein said plurality of laser modules is configured to provide elliptical laser beams to the flow cell, said elliptical laser beams being separated, at a point of impingement upon said flow cell, along a minor transversal axis of the laser beams.

15. The arrangement according to claim 14, wherein the prisms and the or each temperature controller are configured such that the separation between two adjacent laser beams at the point of impingement upon said flow cell can be adjusted by means of the or each temperature controller.
